# DEMANDE DE BREVET EUROPEEN

(11) **EP 1 304 297 A1**
(43) Date de publication de la demande: **23.04.2003**
(21) Numéro de dépôt: 02079302.2
(22) Date de dépôt: 14.10.2002
(51) Int. Cl.: B65D 57/00

(54) **Séparation et stabilisation de feuilles de verre empilées**

(30) Priorité: 16.10.2001 BE 200100665
(71) Demandeur: Glaverbel, 1170 Bruxelles (Watermael-Boitsfort) (BE)
(72) Inventeur: Albert, Grégory Glaverbel-Centre R&D, 6040 Jumet (BE)
(74) Mandataire: Le Vaguerèse, Sylvain

(57) **Abrégé**

Elément intercalaire pour la séparation de feuilles de verre empilées formé d'un seul matériau synthétique de type auto-adhésif, cet élément présentant deux faces planes destinées à entrer en contact avec les feuilles à séparer , la plus grande dimension de ces faces n'étant pas supérieure à 60mm, et l'épaisseur de l'élément n'étant pas supérieure à 6mm.

## Description

L'invention se rapporte à un mode de séparation et de stabilisation de feuilles de verre empilées. Ces modes de séparation sont destinés à réaliser des empilements temporaires de feuilles de verre en vue de leur transport dans des conteneurs vers un lieu où elles seront mises en oeuvre, par exemple dans des châssis d'ensembles architecturaux ou des carrosseries de véhicules, notamment automobiles.

Il est important que les feuilles de verre empilées ne soient pas détériorées durant leur transport, par exemple par griffures ou bris consécutifs à des mouvements de l'empilement provoqués notamment par les vibrations ou chocs pouvant affecter le conteneur dudit empilement.

A cette fin, il est connu de disposer entre deux feuilles de verre successives de l'empilement des éléments intercalaires constitués de matériaux moins durs que le verre et destinés à éviter un contact direct entre ces feuilles de sorte à prévenir qu'elles glissent l'une sur l'autre ou se heurtent et ainsi se griffent ou se brisent. Par exemple, il est courant d'utiliser dans le transport d'empilements de feuilles de verre particulièrement destinées à constituer des vitrages d'automobiles, des feuilles de papier intercalaires.

Cependant, l'usage de tels intercalaires en papier présente de multiples inconvénients. L'on peut citer par exemple le fait que les feuilles de verre ne soient pas stabilisées par les intercalaires de papier durant le transport de l'empilement. En effet, lesdites feuilles peuvent glisser sur le papier et dès lors heurter des éléments du conteneur de transport ce qui peut les endommager. Un autre inconvénient réside dans le fait que les feuilles de papier intercalaires sont chiffonnées lors du désempilement des feuilles de verre sur le lieu de leur mise en oeuvre et doivent par conséquent être jetées ce qui entraîne une charge de gestion de l'évacuation de ces déchets et pose le problème de leur recyclage. Enfin, les feuilles de papier intercalaires étant généralement d'une dimension comparable à celle des feuilles de verre qu'elles sont destinées à séparer, ces feuilles lorsqu'elles sont abandonnées sur le sol du lieu de mise en oeuvre une fois le conteneur parvenu à destination, peuvent représenter un danger de glissement et de chute des personnes chargées de cette mise en oeuvre.

Afin d'éliminer l'inconvénient résultant de la non-stabilisation de feuilles de verre d'un empilement par des intercalaires de papier, il a été proposé de remplacer ces intercalaires par des éléments de dimensions restreintes, constitués de feuilles de matières synthétiques revêtues sur leurs deux faces d'un adhésif. Cependant, la séparation des feuilles de verre utilisant de tels intercalaires peut être difficile. La présence de l'adhésif s'oppose au décollage des éléments intercalaires des feuilles de verre. Par ailleurs, après la séparation des feuilles et l'enlèvement de l'élément intercalaire, des traces d'adhésif difficiles à éliminer restent sur les feuilles de verre.

Il a été proposé différentes solutions destinées à pallier certains des inconvénients susmentionnés.

Ainsi, le brevet US 4,806,404 propose d'utiliser pour réaliser des empilements de feuilles de verre des éléments intercalaires composés d'une feuille d'un matériau de base par exemple composé de polyéthylène cellulaire jointe à une couche adhésive facilement détachable des feuilles de verre sans y laisser de traces durables, par exemple de mousse polyuréthane enrichie en agent plastifiant lui donnant ses propriétés adhésives. L'intercalaire selon US 4,806,404 présente cependant l'inconvénient de ne pas être réutilisable car il perd substantiellement ses propriétés adhésives après une première utilisation. D'autre part, un tel élément intercalaire ne possède qu'une face adhésive de sorte que la feuille de verre au contact de cette face non revêtue d'adhésif, peut glisser de la même manière que sur un intercalaire de papier. De plus, la réalisation d'éléments intercalaires selon ce document est complexe en ce qu'elle requiert l'assemblage de deux matériaux de nature différente.

Le brevet BE 775293 en vue de séparer des feuilles de verres empilées propose quant à lui d'utiliser des intercalaires en matériaux thermoplastiques, par exemple du polyéthylène, intercalaires qui sont rendus adhésifs aux feuilles de verre qu'ils séparent, par thermocollage. De tels intercalaires peuvent être facilement détachables desdites feuilles et ne pas y laisser de trace durable. Néanmoins ils présentent l'inconvénient de ne pas être réutilisables, et nécessitent la mise en oeuvre d'une technique relativement complexe de thermocollage pour assurer leur application aux feuilles de verre.

Pour la séparation et la stabilisation de feuilles de verre empilées la demande de brevet WO 99/24330 propose l'utilisation d'intercalaires comprenant un bloc rigide dont l'épaisseur détermine l'espace ménagé entre les feuilles, associé à une ventouse. Le bloc et la ventouse sont réunis par emboîtement d'un ergot solidaire de la ventouse dans un orifice correspondant ménagé dans le bloc. Dans l'utilisation de l'intercalaire, l'ensemble du bloc et de la ventouse peut être appliqué simultanément sur la feuille de verre par dépression. De tels intercalaires sont facilement détachables des feuilles sur lesquelles ils ne laissent pas de traces durables. Ils sont également réutilisables. Pourtant, ils sont d'une construction complexe par l'assemblage des deux éléments qui les composent et d'un encombrement important lié à la concavité de la ventouse et à l'épaisseur du bloc rigide devant la recouvrir. Cet encombrement limite le nombre de feuilles empilables dans un volume donné, ce qui est défavorable au coût de transport d'un tel empilement. De plus, les intercalaires selon WO 99/24330 n'adhèrent qu'à une des deux feuilles de verre successives qu'ils séparent dans l'empilement, de sorte que l'autre peut glisser comme sur un intercalaire de papier.

L'invention objet de la présente demande de brevet permet de pallier l'ensemble des inconvénients présentés par les intercalaires selon les réalisations de l'état de la technique représentatif de l'art antérieur évoqué ci-dessus.

Pour séparer des feuilles de verre empilées, on utilise selon l'invention la propriété qu'ont certains matériaux synthétiques d'adhérer à des surfaces bien lisses et propres, notamment en verre de manière parfaitement réversible et sans laisser aucune trace. De tels matériaux sont connus et utilisés en particulier sous forme de feuilles minces pour protéger temporairement des surfaces contre les rayures ou analogues de certains produits fragiles jusqu'à leur utilisation par le destinataire final. Ces feuilles sont utilisées par exemple pour protéger les surfaces tels que les écrans de contrôle d'appareils ménagers, verres de montres, lentilles optiques...

Les feuilles en question adhèrent à leur support sans qu'il soit nécessaire de les enduire d'un adhésif, par le seul contact de ces feuilles avec leur support. Si la surface est bien lisse et la feuille appliquée sans plis ni bulle, l'effet de surface s'oppose de façon très efficace au glissement de la feuille dans la direction du plan. A l'inverse, il est très commode de détacher la feuille du support sur lequel elle est appliquée lorsque l'on tire celle-ci à partir d'un de ses bords, dans une direction différente de celle du plan du support.

Les mécanismes dont dépend le type de liaison décrit ci-dessus, sont encore mal connus. Dans la liaison entre la feuille et son support il intervient certainement un effet de surface. La feuille mince et souple épouse très étroitement la surface lisse et propre. Une fois la feuille appliquée sur cette surface support, l'air ne parvient pas commodément à s'introduire entre la feuille et le support. Ce mécanisme s'oppose donc à la séparation. A ce mécanisme s'ajoute certainement l'existence de liaisons faibles entre les constituants du matériau synthétique et ceux du verre.

Les propriétés des feuilles polymères synthétiques constituant le matériau de base, sont souvent modifiées par l'ajout d'additifs tels que des plastifiants, qui améliorent encore les qualités auto-adhésives des feuilles en question, tout en évitant que l'application de ces feuilles sur la surface à protégée s'accompagne d'un dépôt sur cette surface, dépôt qui resterait après que l'on ait ôté la feuille. La présence de ces additifs montre que la souplesse de la feuille est un élément déterminant de son caractère adhésif. Ceci n'empêche pas que d'autres interactions de nature physico-chimiques interviennent dans les mécanismes qui conduisent à ces propriétés d'adhésion réversible. Quoiqu'il en soit, il est important de remarquer que ces propriétés en pratique sont permanentes, et ne s'altèrent pas lorsqu'elles sont mises en oeuvre, au moins dans certaines limites.

Il semble en effet que, pour autant que les surfaces des éléments intercalaires soient maintenues propres, et en particulier dépourvues de poussières, ils peuvent être réutilisés plusieurs fois sans difficulté. Il semble cependant, si l'on doit procéder au lavage de ces éléments entre chaque utilisation que leurs propriétés peuvent finir par décroître. Il est possible que la composition du polymère constituant l'élément intercalaire soit modifiée. En particulier, il est possible que les éléments plastifiants désorbent progressivement laissant une surface moins adhérente.

Dans les applications antérieures, ces matériaux, en raison même du type d'utilisation, étaient sous forme de feuilles très minces et très souples. Sous cette forme les épaisseurs utilisées ne sont pas susceptibles de correspondre à celles des intercalaires selon l'invention. Pour les raisons indiquées précédemment il n'est pas souhaitable de revêtir la totalité de la surface avec ce type d'intercalaire. Des feuilles de grandes dimensions poseraient des problèmes d'application uniforme sans plis, et par ailleurs seraient difficiles à récupérer sans les endommager ou sans que ces feuilles se chargent de poussières. En conséquence les éléments intercalaires selon l'invention sont de dimensions réduites par rapport à celles des feuilles de verre qu'ils séparent.

Les éléments intercalaires sont de préférence dans leur plus grande dimension inférieurs à 60mm et le plus souvent inférieurs à 40mm. Afin de conserver une certaine commodité dans leur manipulation, la plus grande dimension de ces éléments intercalaires n'est de préférence pas inférieure à 10mm.

Pour les raisons analogues à celles indiquées ci-dessus, les éléments intercalaires selon l'invention couvrant une très faible part de la surface des vitrages qu'ils séparent, leur épaisseur est nécessairement plus importante que celle des feuilles de protection de l'art antérieur. Il est en effet nécessaire que ces éléments répartis de façon discrète sur le vitrage garantissent une distance suffisante entre deux feuilles consécutives pour que celles-ci ne risquent pas d'entrer en contact l'une de l'autre. En règle générale l'épaisseur des éléments intercalaires n'est pas inférieure à 1mm. L'épaisseur choisie est fonction du bombage des vitrages empilés. Plus les courbures sont fortes plus l'on aura tendance à accroître la distance entre les vitrages pour qu'une légère variation dans le positionnement relatif de deux feuilles consécutives ne risque pas de conduire à des contacts dommageables. Dans le cas de très fortes courbures l'accroissement de l'épaisseur peut ne pas être suffisant pour prévenir tout contact. C'est aussi par le choix des emplacements des éléments intercalaires, et en augmentant le nombre de ceux-ci, que l'on pourra obtenir le résultat recherché.

Pour différentes raisons l'épaisseur des éléments intercalaires selon l'invention est avantageusement inférieure à 6mm, et de préférence inférieure à 4mm. A l'inverse pour maintenir une distance convenable entre les feuilles l'épaisseur des éléments intercalaires, comme indiqué précédemment est avantageusement le plus souvent au moins de 1mm.

La limitation de l'épaisseur des éléments tient bien entendu à la distance qu'il convient de maintenir entre les feuilles. Indépendamment de cette considération pratique, dans la limitation de l'épaisseur il faut aussi tenir compte du fait que l'aptitude de la feuille à adhérer au vitrage est d'autant meilleure que la feuille est plus mince. Au-delà des valeurs limites indiquées précédemment, l'élément devient moins flexible et son adhérence peut devenir insuffisante pour garantir la stabilité requise.

L'invention permet de par l'utilisation d'éléments intercalaires peu épais, d'empiler un grand nombre de feuilles de verre dans un faible volume et de minimiser de la sorte le coût de transport de l'empilement. D'autre part, l'utilisation d'éléments monolithiques est économique dans la mesure où leur production est simple par rapport à celle d'intercalaires nécessitant l'assemblage de plusieurs éléments. En outre, la fixation des deux faces des intercalaires aux feuilles de verre rend ces dernières solidaires les unes des autres. Ceci améliore la stabilisation de l'empilement et dès lors limite les risques de détérioration des feuilles de verre durant le transport.

Les éléments intercalaires utilisés selon l'invention doivent adhérer aux feuilles, mais de préférence cette adhérence doit rester limitée. Il est nécessaire que les produits transportés dans ces conditions d'empilement soient commodément séparables les uns des autres après qu'ils soient demeurés dans ce type de conditionnement pendant un temps qui peut se prolonger plusieurs jours ou même plusieurs semaines. La tendance à une adhérence trop forte peut se manifester d'autant plus facilement que la pression exercée par la masse des feuilles de verre peut être très importante. C'est aussi pour tenir compte de cette tendance à un accroissement de l'adhérence qu'il convient de limiter la surface de contact de ces éléments intercalaires avec les feuilles de verre. La surface de contact de chaque élément intercalaire ne dépasse pas de préférence une quinzaine de cm² de et de préférence reste inférieure à une dizaine de cm².

La fixation des empilements de feuilles, comme indiqué précédemment peut conduire à une fixation très intense en particulier si la surface totale de contact des éléments intercalaires est importante. Il peut être avantageux de faire en sorte que l'adhérence ne soit pas identique sur les deux faces de l'intercalaire. En différenciant l'aptitude de chacune des faces il est ainsi possible de conserver sur l'une une adhérence relativement forte qui garantit un positionnement stable de l'intercalaire sur une feuille, tandis que l'autre face, moins adhérente présente un maintien de la feuille suivante de façon moins forte. Ce mode de solidarisation « faible» suffit généralement dans les empilements considérés. En effet l'action des intercalaires dans la majorité des cas n'est que très subsidiaire par rapport à celle venant des autres moyens tels que des sangles des barres et de façon générale les éléments des conteneurs utilisés. En ayant une face moins adhérente, une fois les éléments de fixation du conteneur retirés, les feuilles peuvent être séparées les unes des autres sans effort excessif.

Les éléments intercalaires selon l'invention sont constitués d'un seul matériau. En conséquence les propriétés d'adhérence sont en principe identiques sur les deux faces. Pour obtenir la différence indiquée précédemment, selon l'invention il est proposé d'établir des états de surface différents. L'adhérence de l'élément est d'autant plus forte que la surface est plus lisse. En conséquence l'invention propose, pour les éléments devant présenter deux niveaux d'adhérence distincts sur leurs deux faces, que celles-ci soient produites avec une rugosité différente. Ceci pour des feuilles polymères est obtenu de façon traditionnelle par exemple par calandrage sur de rouleaux présentant eux-mêmes une surface plus ou moins lisse.

Le nombre d'éléments pour séparer deux feuilles n'est pas inférieur à trois, et peut s'accroître comme indiqué en fonction de la dimension et de la complexité de forme des feuilles. Pour la facilité de mise en oeuvre, pose et dépose de ces éléments, leur nombre est aussi petit que possible. Dans tous les cas, la surface totale des feuilles au contact de ces éléments intercalaires reste une très faible fraction de la surface des feuilles elles-mêmes. Cette fraction est avantageusement au plus égale à 2%, et le plus souvent, au plus égale à 1%.

La forme des éléments intercalaires utilisés selon l'invention est choisie essentiellement en fonction de la simplicité de leur production et de celle de leur utilisation. Avantageusement ces éléments sont obtenus par la découpe de feuilles planes pour constituer des rubans, lesquels sont ensuite découpés pour correspondre aux éléments eux-mêmes. Dans ce schéma qui facilite en particulier la fabrication des éléments au moment même de leur utilisation, ceux-ci sont donc de forme rectangulaire, et de préférence sont sensiblement carrés. Bien entendu cette forme n'est pas limitative. Les éléments peuvent être de forme polygonale variée, ou de forme circulaire.

Les éléments utilisés selon l'invention sont constitués dans les matériaux connus pour former les feuilles minces protectrices auto-adhésives connues. Il s'agit notamment de matériaux polymères éventuellement modifiés par des additifs et/ou plastifiants. Ces matériaux contrairement à ceux utilisés en combinaison dans le document cité US 4,806,404, ne sont pas expansés mais sous forme massive ce qui leur confère une meilleure résistance à l'écrasement et par suite une meilleure stabilité et les dispose à des utilisations multiples. Les polymères utilisés sont par exemple des polymères vinyliques comme les chlorures de polyvinyle. Il peut s'agir aussi de copolymères dont les caractéristiques leur confèrent à la fois la souplesse nécessaire et l'adhérence appropriée.

Dans l'application des éléments intercalaires selon l'invention, pour faciliter leur mise en oeuvre, il est parfois avantageux de faire en sorte qu'ils soient facilement discernables sur les feuilles sur lesquelles ils sont disposés, en particulier pour s'assurer que ces élément sont bien retirés de la feuille. Pour cela, il est préférable qu'ils présentent une couleur différente de celle de la feuille ou une certaine opacité, de sorte qu'ils apparaissent clairement. En effet à l'état le plus usuel les polymères du type utilisé pour fabriquer ces éléments sont ordinairement incolores et transparent comme beaucoup de feuilles de verre.

## Revendications

1. Elément intercalaire pour la séparation de feuilles de verre empilées formé d'un seul matériau synthétique de type auto-adhésif, cet élément présentant deux faces planes destinées à entrer en contact avec les feuilles à séparer, la plus grande dimension de ces faces n'étant pas supérieure à 60mm, et l'épaisseur de l'élément n'étant pas supérieure à 6mm.

2. Elément intercalaire selon la revendication 1 dans lequel la plus grande dimension des faces n'est pas supérieure à 40mm.

3. Elément intercalaire selon l'une des revendications précédentes dans lequel la plus grande dimension des faces n'est pas inférieure à 10mm.

4. Elément intercalaire selon l'une des revendications précédentes dans lequel l'épaisseur est inférieure à 4mm.

5. Elément intercalaire selon l'une des revendications précédentes présentant des faces de forme rectangulaires.

6. Séparation de feuilles de verre empilées, au moyen d'éléments intercalaires selon l'une des revendications précédentes comprenant la mise en oeuvre d'au moins trois éléments entre deux feuilles de verre consécutives.

7. Séparation de feuilles de verre selon la revendication 6 dans laquelle les éléments de séparation recouvrent une surface au plus égale à 2% de la surface de chaque feuille de verre.

8. Séparation de feuilles de verre selon la revendication 7 dans laquelle les éléments de séparation recouvrent une surface au plus égale à 1% de la surface de chaque feuille de verre.
